# EUROPEAN PATENT SPECIFICATION

(11) **EP 3 397 576 B1**
(45) Date of publication and mention of the grant of the patent: **07.10.2026**
(21) Application number: 16882644.4
(22) Date of filing: 29.12.2016
(51) Int. Cl.: B65G 43/02, B65G 23/44, G01L 5/04

(54) **CONTROL SYSTEM FOR DETECTING AND CORRECTING AN IMBALANCE IN A CONVEYOR SYSTEM**
STEUERUNGSSYSTEM ZUR DETEKTION UND KORREKTUR EINER UNWUCHT IN EINEM FÖRDERSYSTEM
SYSTÈME DE COMMANDE PERMETTANT DE DÉTECTER ET DE CORRIGER UN DÉSÉQUILIBRE DANS UN CONVOYEUR À BANDE

(30) Priority: 30.12.2015 US 201562272862 P
(43) Date of publication of application: 07.11.2018
(73) Proprietor: Laitram, LLC, Harahan, LA 70123 (US)
(72) Inventor: BOGLE, David W., Round Rock, Texas 78681 (US)
(74) Representative: Forresters IP LLP
(86) International application number: PCT/US2016/069123
(87) International publication number: WO 2017/117354

(56) References cited:
- WO-A1-2013/155449
- DE-A1- 102005 007 976
- JP-A- H10 332 342
- US-A- 4 372 172
- US-A- 5 505 293
- US-A- 5 743 376
- US-A1- 2009 194 391
- US-B2- 7 117 989
- US-B2- 7 987 973
- US-B2- 8 191 703
- US-B2- 8 285 494

## Description

### Related Applications

This application claims priority to US Provisional Patent Application Serial Number 62/272,862, filed December 30, 2015 and entitled "Control System for Detecting and Correcting an Imbalance in a Conveyor System".

### Field of the Invention

The present invention relates to power-driven conveyors. More particularly, the present invention relates to a control system for detecting an imbalance in a conveyor system.

### Background of the Invention

Conveyor belts are typically used for conveying bulk material, such as foodstuffs or other materials, through a processing environment or from one location to another. Typical conveyor belts have the advantage that relatively little energy is required for transporting the bulk material. Certain conveyor belts employ multiple drives. For example, one or more intermediate drives may be used to drive a conveyor belt along an extended, winding or spiral conveyor path.

In conveyor systems that employ multiple drives for a conveyor belt, controls can be a problem. If the drives are not synchronized, the system can become imbalanced, potentially resulting in stress-related damage. Currently, detection and correction of imbalances must be done manually, which is imprecise and unreliable.

US Patent No 5,743, 376 discloses a spiral freezer conveyor belt infeed collapsing system which is designed to assist in reducing food product deformation associated with a typical collapsing conveyor belt using in a spiral or curved conveyor system. Said document discloses a method for detecting and correcting an imbalance in a conveyor belt of a multi-drive conveyor system, comprising the steps of: detecting an imbalance in a conveyor belt by measuring gaps between consecutive conveying belt modules near a first drive using a sensor adjacent to the side edge of the conveyor belt after a drive contact point to ensure that the conveyor belt has properly collapsed; and automatically instituting a corrective action using a controller based on a reading from the sensor, wherein a presence of gaps with a size different from a predetermined gap size after the first drive indicates an imbalance. Said document further discloses a corresponding multi-drive conveyor system comprising a conveyor belt; a first drive driving the conveyor belt at a first location; a second drive driving the conveyor belt at a second location; a tension sensor adjacent to the side edge of the conveyor belt after the first drive contact point and a controller.

According to a first aspect of the present invention there is provided a method for detecting and correcting an imbalance in a conveyor belt as set forth in claim 1.

In a further aspect of the present invention, there is provided a multi-drive conveyor system as set forth in claim 6.

### Brief Description of the Figures

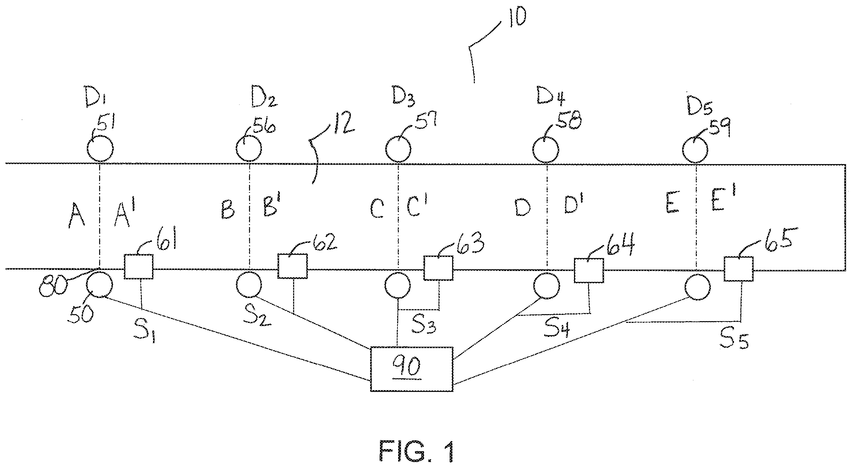

FIG. 1 is a schematic overhead view of a multi-drive conveyor system including sensors for detecting an imbalance in the conveyor belt.

### Detailed Description

A control system detects imbalances in a conveyor and implements automated corrective strategies. The invention will be described below relative to certain illustrative embodiments, though one skilled in the art will recognize that the invention is not limited to the illustrative embodiments, but is defined in the independent claims.

Referring to FIG. 1, a conveyor system 10 conveys articles along a conveyance path. The belt conveyor includes a conveyor belt 12, which may be a modular plastic conveyor belt, or another type of conveyor belt, driven by a plurality of drives 50-59 at various locations D₁-D₅ along the conveyance path. The illustrative conveyor system 10 includes paired drives at five drive locations, with a drive driving drive elements on each side edge of the conveyor belt at each drive location. The conveyor is not limited to the illustrative drive configuration, and the conveyor system can include any suitable number of drives, paired or unpaired, at any suitable location, and the drives can have any suitable spacing therebetween. The illustrative drive 50-59 comprise round sprockets that engage drive elements on the side edge of the conveyor belt, the but invention is not so limited. The drive can be an I-drive from the bottom of the belt, a magnetic LIM drive or any suitable drive.

The conveyor 10 is not limited to a straight conveyor, and the conveyor could be curved, spiral, in the shape of a racetrack any other configuration.

The conveyor further includes sensors 61-65 in the vicinity of the drives 50-59 on one side of the conveyor belt 12. In one embodiment, which is not a part of the invention, each sensor 61-65 measures the tension in the conveyor belt 12 immediately after the conveyor belt exits the corresponding drive. According to the invention, a sensor measures tension before the drive. When tensioned, a modular plastic conveyor belt stretches to the belt pitch. When relaxed (pushed instead of pulled), the modules collapse like a rope. The sensors 61-65 measure to make sure that the modules properly collapse after a drive and, according to the invention, are stretched out before a drive.

The illustrative sensors 61-65 are located at the edge of the belt. In one embodiment, a sensor is located below a conveyor belt to prevent interference from a conveyed product on the belt.

A controller 90 receives signals from the sensors 61-65 and institutes a corrective action if a tension sensor detects an imbalance in the conveyor belt.

In a balanced system, the tension in the conveyor belt 12 immediately after a drive should be zero or about zero. For example, a modular plastic conveyor belt should be collapsed after a drive, indicating lack of tension. The conveyor module at a drive contact point 80 experiences the greatest amount of tension as it pulls the load from that point to the immediate upstream drive contact point. The tension in the conveyor belt 12 immediately prior to each drive should be at a maximum. Highest tension is indicated by the modules entering the drive being fully separated.

The number of "collapsed" rows in the conveyor belt 12 after exiting a drive should be limited, as product orientation at each of the collapsed areas can be lost. On the other hand, when there are no collapsed rows, the sprocket tooth may not provide any pull to the belt and the downstream drive has to carry more load, causing imbalance in the system and potentially resulting in stress related damages.

In the embodiment shown in FIG. 1, the first sensor 61 measures the tension in the belt in area A'. In an example not according to the invnetion, the first sensor 61 can measure the gap between modules after exiting the drive to detect whether the belt has properly collapsed. If gaps above a particular size are present, indicative of tension remaining in the belt and instability in the system, the controller 90 in communication with the sensor 61 takes corrective action. For example, the controller 90 can sound an alarm or send a signal adjusting the speed of one or more of the drives 50-59. Alternatively, if the motors for the drives are locked on speed together, the controller could disengage a clutch or other device to allow a particular drive to slip to correct an imbalance.

An example of a suitable sensor is a laser sensor available from Keyence Corporation of America, comprising a light beam emitter and a receiver. The light beam emitter is disposed above the conveyor belt 12 and directs a laser beam into the edge of the conveyor belt. A receiver below the conveyor belt 12 opposite the laser receives the beam to detect gaps in the side edge. Based on the presence or absence of gaps or the size of gaps, the sensor determines whether appropriate bunching of conveyor modules is occurring and tension is released from the belt. Other means for measuring tension may be used and the invention is not limited to measuring gaps between modules to determine tension or detect an imbalance.

Any suitable sensor for detecting an imbalance in a conveyor belt may be used. For example, the sensor can be a proximity sensor, magnetic sensor, infrared sensor or any other suitable type of sensor.

Alternative to measuring gaps between modules, the conveyor belt may include magnets or another detectable material that the sensor can measure to detect imbalances. These alternatives are not a part of the present invention.

For a spiral conveyor, the drives may comprise sprocket towers, each comprising a series of sprockets mounted on drive shafts. A motor drives each drive shaft to spin the sprockets. The illustrative embodiment includes four sprocket towers, though the invention is not so limited. A first sprocket tower is mounted on the outside of the spiral, such that the sprocket teeth engage drive elements on the outer edge of the conveyor belt. A second sprocket tower is opposite the first sprocket tower engages drive elements in the inner edge of the conveyor belt. Other sprocket towers drive the conveyor belt in other locations. In one embodiment, a single motor is connected to a pair of sprockets towers. Alternatively, the sprocket towers may be independently driven. The motors may vary the speed of the sprockets depending on information from sensors, as described above, or based on other information.

## Claims

1. A method for detecting and correcting an imbalance in a conveyor belt (12) of a multi-drive conveyor system (10), comprising the steps of:
detecting an imbalance in a conveyor belt (12) by measuring gaps between consecutive conveying belt modules near a first drive (50; 56; 57; 58; 59 for the conveyor belt (12) using a sensor (61-65) adjacent to the side edge of the conveyor belt (12) before a drive contact point (80) of the first drive (50; 56; 57; 58;59) to ensure full separation of the conveyor belt modules;
and
automatically instituting a corrective action using a controller (90) based on a reading from the sensor (61-65), wherein an absence of gaps before the first drive (50; 56; 57; 58; 59) indicates an imbalance.

2. The method of claim 1, wherein the first drive (50; 56; 57; 58; 59) comprises a side drive that engages drive elements on the edge of the conveyor belt (12).

3. The method of claim 1, wherein the corrective action comprises adjusting the speed of the first drive (50; 56; 57; 58; 59).

4. The method of claim 1, wherein the sensor (61-65) comprises a light emitter above the edge of the conveyor belt (12) and a light receiver below the edge of the conveyor belt for detecting the gap between consecutive conveyor belt modules in the conveyor belt (12).

5. The method of claim 1, wherein the step of sensing the presence of a gap comprises the step of directing a light beam into an edge of the conveyor belt (12) using a light emitter and receiving the light beam with a receiver if a gap exists.

6. A multi-drive conveyor system (10), comprising:
a conveyor belt (12);
a first drive (50; 56; 57; 58; 59) driving the conveyor belt at a first location;
a second drive (51; 52; 53; 54; 55) driving the conveyor belt at a second location; and
a tension sensor (61-65) adjacent the first drive configured to measure gaps between consecutive conveyor belt modules in the conveyor belt near the first drive, wherein the sensor (61-65) is arranged adjacent to the side edge of the conveyor belt (12) before a drive contact point (80) of the first drive (50; 56; 57; 58; 59) to ensure full separation of the conveyor belt modules;
wherein an absence of gaps before the first drive indicates an imbalance;
a controller (90) configured to institute a corrective action if the tension sensor (61-65) detects an imbalance in the conveyor belt (12).

7. The multi-drive conveyor system of claim 6, wherein the tension sensor (61-65) comprises a light emitter and a light receiver for detecting gaps between modules in the conveyor belt (12).

8. The multi-drive conveyor system of claim 6, wherein the controller (90) initiates an alarm if the tension sensor (61-65) detects an imbalance in the conveyor belt (12).

9. The multi-drive conveyor system of claim 6, wherein the controller (90) adjusts the speed of one of the first drive (50; 56; 57; 58; 59) and the second drive (51; 52; 53; 54; 55) if the tension sensor (61-65) detects an imbalance in the conveyor belt (12).

## Patentansprüche

1. Verfahren zum Detektieren und Korrigieren eines Ungleichgewichts in einem Förderband (12) eines Mehrfachantriebsfördersystems (10), das die folgenden Schritte umfasst:
Detektieren eines Ungleichgewichts in einem Förderband (12) durch Messen von Lücken zwischen aufeinanderfolgenden Förderbandmodulen in der Nähe eines ersten Antriebs (50; 56; 57; 58; 59) für das Förderband (12) unter Verwendung eines Sensors (61-65) neben der Seitenkante des Förderbands (12) vor einem Antriebskontaktpunkt (80) des ersten Antriebs (50; 56; 57; 58; 59), um eine vollständige Trennung der Förderbandmodule sicherzustellen; und
automatisches Einleiten einer Korrekturmaßnahme unter Verwendung einer Steuerung (90) basierend auf einem Messwert von dem Sensor (61-65), wobei ein Nichtvorhandensein von Lücken vor dem ersten Antrieb (50; 56; 57; 58; 59) ein Ungleichgewicht anzeigt.

2. Verfahren nach Anspruch 1, wobei der erste Antrieb (50; 56; 57; 58; 59) einen Seitenantrieb umfasst, der in Antriebselemente an der Kante des Förderbands (12) eingreift.

3. Verfahren nach Anspruch 1, wobei die Korrekturmaßnahme das Anpassen der Geschwindigkeit des ersten Antriebs (50; 56; 57; 58; 59) umfasst.

4. Verfahren nach Anspruch 1, wobei der Sensor (61-65) einen Lichtsender über der Kante des Förderbands (12) und einen Lichtempfänger unter der Kante des Förderbands zum Detektieren der Lücke zwischen aufeinanderfolgenden Förderbandmodulen in dem Förderband (12) umfasst.

5. Verfahren nach Anspruch 1, wobei der Schritt des Erfassens des Vorhandenseins einer Lücke den Schritt des Richtens eines Lichtstrahls in eine Kante des Förderbands (12) unter Verwendung eines Lichtsenders und des Empfangens des Lichtstrahls mit einem Empfänger, wenn eine Lücke vorhanden ist, umfasst.

6. Mehrfachantriebsfördersystem (10), das Folgendes umfasst:
ein Förderband (12);
einen ersten Antrieb (50; 56; 57; 58; 59), der das Förderband an einer ersten Stelle antreibt;
einen zweiten Antrieb (51; 52; 53; 54; 55), der das Förderband an einer zweiten Stelle antreibt; und
einen Zugspannungssensor (61-65) neben dem ersten Antrieb, der dazu ausgelegt ist, Lücken zwischen aufeinanderfolgenden Förderbandmodulen in dem Förderband in der Nähe des ersten Antriebs zu messen, wobei der Sensor (61-65) neben der Seitenkante des Förderbands (12) vor einem Antriebskontaktpunkt (80) des ersten Antriebs (50; 56; 57; 58; 59) angeordnet ist, um eine vollständige Trennung der Förderbandmodule sicherzustellen;
wobei ein Nichtvorhandensein von Lücken vor dem ersten Antrieb ein Ungleichgewicht anzeigt;
eine Steuerung (90), die dazu ausgelegt ist, eine Korrekturmaßnahme einzuleiten, wenn der Zugspannungssensor (61-65) ein Ungleichgewicht in dem Förderband (12) detektiert.

7. Mehrfachantriebsfördersystem nach Anspruch 6, wobei der Zugspannungssensor (61-65) einen Lichtsender und einen Lichtempfänger zum Detektieren von Lücken zwischen Modulen in dem Förderband (12) umfasst.

8. Mehrfachantriebsfördersystem nach Anspruch 6, wobei die Steuerung (90) einen Alarm auslöst, wenn der Zugspannungssensor (61-65) ein Ungleichgewicht in dem Förderband (12) detektiert.

9. Mehrfachantriebsfördersystem nach Anspruch 6, wobei die Steuerung (90) die Geschwindigkeit eines von dem ersten Antrieb (50; 56; 57; 58; 59) und dem zweiten Antrieb (51; 52; 53; 54; 55) anpasst, wenn der Zugspannungssensor (61-65) ein Ungleichgewicht in dem Förderband (12) detektiert.

## Revendications

1. L'invention concerne un procédé de détection et de correction d'un déséquilibre dans une bande transporteuse (12) d'un système de transporteur à entraînement multiple (10), comprenant les étapes consistant à :
détecter un déséquilibre dans une bande transporteuse (12) en mesurant les espaces entre des modules consécutifs de celle-ci à proximité d'un premier entraînement (50; 56; 57; 58; 59) pour la bande transporteuse (12)
utiliser un capteur (61-65) adjacent au bord latéral de la bande transporteuse (12) en amont d'un point de contact d'entraînement (80) du premier entraînement (50; 56; 57; 58; 59) afin de garantir la séparation complète des modules de la bande transporteuse ;
lancer automatiquement une action corrective à l'aide d'un dispositif de commande (90) qui se base sur un relevé du capteur (61-65), l'absence d'espaces en amont du premier entraînement (50; 56; 57; 58; 59) indiquant un déséquilibre.

2. Procédé selon la revendication 1, dans lequel l'entraînement (50; 56; 57; 58; 59) comprend un entraînement latéral qui vient en prise avec des éléments d'entraînement sur le bord de la bande transporteuse (12).

3. Procédé selon la revendication 1, dans lequel l'action corrective comprend l'ajustement de la vitesse d'entraînement (50; 56; 57; 58; 59).

4. Procédé selon la revendication 1, dans lequel le capteur (61-65) comprend un émetteur de faisceau lumineux placé au-dessus et un récepteur de faisceau lumineux placé en dessous du bord de la bande transporteuse (12) permettant de détecter un espace entre des modules consécutifs de celle-ci (12).

5. Procédé selon la revendication 1, dans lequel l'étape de détection de la présence d'un espace comprend une étape consistant à émettre un faisceau lumineux en direction d'un bord de la bande transporteuse (12) à l'aide d'un émetteur de faisceau lumineux et à recevoir le faisceau lumineux sur un récepteur en cas de détection d'un espace.

6. Système de transporteur à entraînement multiple (10), comprenant :
une bande transporteuse (12) ;
un premier entraînement (50; 56; 57; 58; 59) entraînant la bande transporteuse à un premier emplacement ;
un deuxième entraînement (51; 52; 53; 54; 55) entraînant la bande transporteuse à un deuxième emplacement ; et
un capteur de tension (61-65) adjacent au premier entraînement configuré pour mesurer les espaces entre des modules consécutifs de la bande transporteuse à proximité du premier entraînement, le capteur (61-65) étant placé de manière adjacente au bord latéral de la bande transporteuse (12) en amont d'un point de contact d'entraînement (80) du premier entraînement (50; 56; 57; 58; 59) afin de garantir la séparation complète des modules de bande transporteuse ; l'absence d'espace en amont du premier entraînement indiquant un déséquilibre ;
un dispositif de commande (90) configuré pour lancer une action corrective en cas de détection d'un déséquilibre dans la bande transporteuse (12) par le capteur de tension (61-65).

7. Système de transporteur à entraînement multiple selon la revendication 6, dans lequel le capteur de tension (61-65) comprend un émetteur et un récepteur de faisceau lumineux afin de détecter des espaces entre des modules dans la bande transporteuse (12).

8. Système de transporteur à entraînement multiple selon la revendication 6, dans lequel le dispositif de commande (90) déclenche une alarme en cas de détection d'un déséquilibre dans la courroie transporteuse (12) par le capteur de tension (61-65).

9. Système de transporteur à entraînement multiple selon la revendication 6, dans lequel le dispositif de commande (90) ajuste la vitesse de l'un du premier entraînement (50; 56; 57; 58; 59) et du second entraînement (51; 52; 53; 54; 55) en cas de détection d'un déséquilibre dans la courroie transporteuse (12) par le capteur de tension (61-65).
